## Europäisches Patentamt
## European Patent Office
## Office européen des brevets

(19)

(11) Veröffentlichungsnummer : **0 157 904 B1**

(12) **EUROPÄISCHE PATENTSCHRIFT**

(45) Veröffentlichungstag der Patentschrift :
30.09.87

(51) Int. Cl.⁴ : **F 16 J 15/32**

(21) Anmeldenummer : **84109932.8**

(22) Anmeldetag : **21.08.84**

(54) **Kassettendichtung.**

(30) Priorität : **13.04.84 DE 3414008**

(43) Veröffentlichungstag der Anmeldung :
**16.10.85 Patentblatt 85/42**

(45) Bekanntmachung des Hinweises auf die Patenterteilung : **30.09.87 Patentblatt 87/40**

(84) Benannte Vertragsstaaten :
**AT BE CH DE FR GB IT LI LU NL SE**

(56) Entgegenhaltungen :
**EP-A- 0 051 170
DE-A- 3 213 809
DE-C- 2 500 099
FR-A- 2 430 555
FR-A- 2 510 221
GB-A- 2 096 716**

(73) Patentinhaber : **Firma Carl Freudenberg
Höhnerweg 4
D-6940 Weinheim/Bergstrasse (DE)**

(72) Erfinder : **Schmitt, Wilhelm, Dr. Dipl. Ing.
Im Vordersberg 8
D-6148 Heppenheim-Erbach (DE)**

(74) Vertreter : **Weissenfeld-Richters, Helga, Dr.
Höhnerweg 2
D-6940 Weinheim/Bergstrasse (DE)**

## Beschreibung

Kassettendichtung aus einem Außen- und einem Innenring, bei der der Außenring mit einer Dichtlippe aus elastisch nachgiebigem Werkstoff versehen ist, die unter einer elastischen Vorspannung an dem Innenring anliegt, bei der der Außenring mit einer nach innen weisenden Haltekralle versehen ist, die auf der der Dichtlippe zugewandten Seite durch eine sich in radialer Richtung erstreckende Stützfläche begrenzt ist, wobei die Haltekralle hinter der von der Dichtlippe abgewandten, sich in radialer Richtung erstreckende Haltefläche eines nach außen ragenden Vorsprunges des Innenringes federnd eingeschnappt ist, wobei wenigstens die Stützfläche oder die Haltefläche umlaufend ausgebildet ist und wobei die Stützfläche und die Haltefläche einen Abstand voneinander haben.

Auf eine Kassettendichtung der vorgenannten Art nimmt die DE-C- 2 500 099 Bezug. Die mit dem Außenring verbundene Dichtlippe liegt dabei an einer sich in axialer Richtung erstreckenden Gegenfläche des Innenringes an, wobei der Innenring auf der von der Gegenfläche abgewandten Seite mit einer gummielastischen Zwischenschicht versehen und durch diese auf der Oberfläche der abgedichteten Welle festgelegt ist. Das hiermit erzielbare Abdichtungsergebnis ist wenig befriedigend, insbesondere, wenn während des normalen Betriebes hohe Wellendrehzahlen und/oder radiale Wellenverlagerungen auftreten können.

Der Erfindung liegt die Aufgabe zugrunde, eine Kassettendichtung der vorgenannten Art derart weiter zu entwickeln, daß hohe Wellendrehzahlen und/oder radiale Wellenverlagerungen nicht mehr zu einer Beeinträchtigung des Abdichtungsergebnisses führen können. Diese Aufgabe wird erfindungsgemäß mit einer Kassettendichtung der eingangs genannten Art gelöst, die dadurch gekennzeichnet ist, daß die Dichtlippe an einer sich im wesentlichen in radialer Richtung erstreckenden Gegenfläche des Innenringes anliegt, daß der Innenring auf der von der Gegenfläche abgewandten Naßfläche durch abgedichtetes Medium benetzt wird und daß der Innenring zwischen der Gegenfläche und der Naßfläche durchgehend aus metallischem Werkstoff besteht.

Durch das Zusammenwirken der Dichtlippe der vorgeschlagenen Kassettendichtung mit einer sich im wesentlichen in radialer Richtung erstreckenden Gegenfläche ergeben sich auch beim Auftreten radialer Wellenverlagerungen keine nennenswerten Veränderungen hinsichtlich der gegenseitigen Anpressung zwischen beiden Teilen. Der Einfluß, den radiale Wellenverlagerungen auf das erzielte Abdichtungsergebnis haben können, ist hierdurch stark vermindet. Die betriebsbedingt auftretenden Fliehkräfte unterstützen das erwünschte Abdichtungsergebnis.

Von ähnlich großer Bedeutung ist es daneben, daß der Innenring auf der von der Gegenfläche abgewandten Naßfläche durch abgedichtetes Medium benetzt wird, und daß der Innenring zwischen der Gegenfläche und der Naßfläche durchgehend aus einem metallischen Werkstoff besteht. Die axiale Dicke des Innenringes zwischen der Gegenfläche und der Naßfläche ist sehr gering und beträgt im allgemeinen nur etwa 0,5 bis 5 mm, wodurch die im Bereich der dynamischen Abdichtungszone freigesetzte Reibungswärme leicht abgeführt und an das abgedichtete Medium übergeben werden kann. Es sind daher auch bei Verwendung gummielastischer Werkstoffe für die Herstellung der Dichtlippe weder Anbackungserscheinungen noch Werkstoffversprödungen während des laufenden Betriebes zu befürchten.

Die Dichtlippe kann im übrigen selbstverständlich aus irgendeinem der einschlägig verwendeten, polymeren Werkstoffe hergestellt werden, beispielsweise auch aus PTFE. Neben NBR, ACM, FKM kann beispielsweise VMQ zur Anwendung gelangen.

Nach einer vorteilhaften Ausgestaltung ist es vorgesehen, daß die Dichtlippe und/oder die Gegenfläche mit hydrodynamisch wirkenden Rückförderelementen versehen sind.

Das erwünschte Abdichtungsergebnis läßt sich hierdurch spürbar verbessern.

Von Einfluß auf das erzielte Abdichtungsergebnis ist auch die gegenseitige Verpressung zwischen der Dichtlippe und der Gegenfläche. Um diesbezüglich gute Werte zu erreichen, hat es sich als vorteilhaft erwiesen, wenn die Gegenfläche und die Dichtungsachse in Richtung des abgedichteten Raumes Winkel einschließen, die geringfügig kleiner sind als 90°. Der bevorzugte Bereich wird jedoch durch die Grenzwerte 60 und 90° begrenzt.

In Fällen, in denen neben radialen Verlagerungen der abgedichteten Welle zusätzlich auch noch gewisse axiale Verlagerungen in Kauf genommen werden müssen, hat es sich als vorteilhaft bewährt, wenn die Dichtlippe am Außenumfang eines sich im wesentlichen in radialer Richtung erstreckenden, membranartig ausgebildeten Zwischenringes angeordnet ist. Die notwendige Anpressung der Dichtlippe an die Gegenfläche läßt sich durch eine entsprechende Ausbildung beim Auftreten axialer Wellenverlagerungen leichter gewährleisten.

Die Dichtlippe der vorgeschlagenen Kassettendichtung besteht in aller Regel aus einem polymeren Werkstoff, und die gegenseitige Anpressung zwischen der Dichtlippe und der Gegenfläche kann dadurch im Laufe der Zeit als Folge von Relaxationserscheinungen nachlassen. Um dem vorzubeugen, hat es sich als vorteilhaft erwiesen, wenn der Zwischenring eine nach außen geöffnete Nute aufweist, in der ein elastisch aufgeweitetes Federelement angeordnet ist, vorzugsweise eine Ringwendelfeder aus metallischem Werkstoff.

Eine gleichbleibende Anpressung zwischen der Dichtlippe und der Gegenfläche läßt sich hierdurch auch beim Auftreten höherer Temperaturen über längere Zeiträume besser gewährleisten.

Um den Verschleiß der Gegenfläche herabzusetzen, hat es sich als vorteilhaft bewährt, wenn der Innenring aus gehärtetem Stahl besteht. Die Härte Rockwell kann etwa 60 betragen, wobei sich Montageerleichterungen erzielen lassen, wenn der Innenring ähnlich wie derjenige nach der Kassettendichtung gemäß DE-C- 2 500 099 durch eine elastisch nachgiebige Zwischenschicht flüssigkeitsdicht und verdrehsicher auf der abgedichteten Welle gelagert ist.

Der Innenring kann auf der Naßfläche Vertiefungen aufweisen, die in radialer Richtung nach außen geöffnet sind. Die für die Wärmeübertragung an das abgedichtete Medium zur Verfügung stehende Oberfläche erfährt hierdurch eine Vergrößerung, wodurch erreicht wird, daß die im Bereich der dynamischen Dichtungszone herrschenden Temperaturen in etwa denjenigen entsprechen, die das abgedichtete Medium aufweist. Kritische Temperaturerhöhungen werden hierdurch mit großer Sicherheit vermieden.

Die Dichtlippe kann desweiteren auf der von dem abgedichteten Raum abgewandten Seite mit einer Staublippe versehen sein, wobei die Staublippe an dem sich in axialer Richtung erstreckenden Schenkel des Profils des Innenringes anliegt. Dichtlippe und Staublippe bestehen somit aus einem in sich zusammenhängenden Werkstoffkörper, was die Herstellung stark erleichtert. Eine Beaufschlagung der Dichtlippe mit abrasiv wirkenden Materialien aus der Umgebung wird hierdurch verhindert.

Der Innenring und/oder die Staublippe können im Bereich der gegenseitigen Berührungsflächen mit Rückförderelementen für abgedichtetes Medium versehen sein, in diesem Falle für Staub. Einer Einlagerung von Fremdstoffen in den Innenraum der Kassettendichtung wird dadurch vorgebeugt.

Falls Rückförderelemente sowohl im Bereich der Staublippe als auch im Bereich der Dichtlippe vorhanden sind, ist es bei der vorgeschlagenen Ausführung ohne weiteres möglich, den Rückförderelementen in beiden Bereichen sowohl hinsichtlich ihres Querschnittes als auch hinsichtlich ihres gegenseitigen Abstandes gleiche Dimensionen zu geben, was die Herstellung außerordentlich stark erleichtert. Die im Bereich der Dichtlippe angeordneten Rückförderelemente haben nämlich als Folge der hier herrschenden, größeren Relativgeschwindigkeit stets eine größere Wirksamkeit als die im Bereich der Staublippe angeordneten Rückförderelemente. Undichtigkeiten sind daher auch bei einer solchen Ausführung nicht zu befürchten.

Für die Herstellung des Außenringes lassen sich Kunststoffe vorteilhaft verwenden, beispielsweise Polypropylen oder Polyester. Sie haben eine gewisse Nachgiebigkeit, wodurch die Erzielung der notwendigen statischen Abdichtung gegenüber der aufnehmenden Gehäusebohrung stark erleichtert wird. Desweiteren ist die Formgebung bei Anwendung von Spritz-, Preß- oder Spritzpreßtechnologien relativ einfach, so daß sich eine Nacharbeit erübrigt. Dabei ist es unter Anwendung bekannter Technologien ebenfalls möglich, die Herstellung des Außenringes und der Dichtlippe verfahrenstechnisch zusammenzufassen und in einem einzigen Werkzeug vorzunehmen. Die bei der getrennten Herstellung notwendige gegenseitige Verknüpfung zwischen beiden Teilen kann so entfallen.

Außen- und Innenring der vorgeschlagenen Kassettendichtung sind durch Einschnappmontage verbunden und trotz der leichten Relativbeweglichkeit unverlierbar aneinander festgelegt. Eine Beschädigung der Dichtlippe während der Lagerung und des Transportes ist dadurch ausgeschlossen, bei der Montage erübrigt sich eine spezielle Justierung des Innenringes in bezug auf den Außenring vor Inbetriebnahme der Kassettendichtung.

In der in der Anlage beigefügten Zeichnung sind zwei beispielhafte Ausführungen der vorgeschlagenen Kassettendichtung dargestellt. Sie werden nachfolgend näher erläutert. Es zeigen :

Figur 1 eine Ausführung, bei der die dem abgedichteten Medium zugewandte Dichtlippe an einem sich im wesentlichen in radialer Richtung erstreckenden Bereich des Innenringes anliegt.

Figur 2 eine Ausführung ähnlich wie in Figur 1 dargestellt, bei der die axiale Anpressung der dem abgedichteten Medium zugewandten Dichtlippe durch eine Ringwendelfeder unterstützt wird.

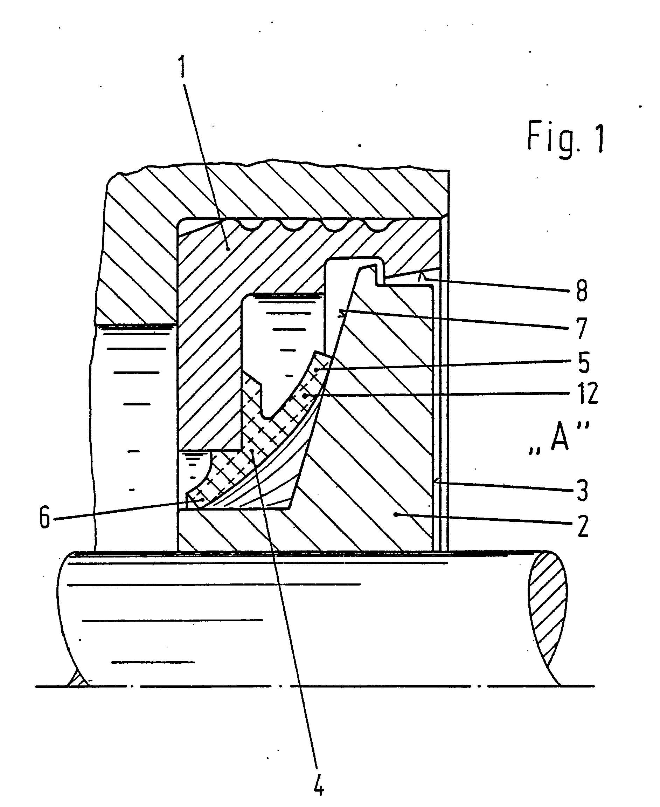

Die in Figur 1 gezeigte Kassettendichtung umfaßt den Außenring 1 und den Innenring 2. Beide haben ein winkelförmig begrenztes Profil und sind maßlich derart aufeinander abgestimmt und einander zugeordnet, daß ein rechteckig profilierter Hohlraum umschlossen wird.

Der Außenring 1 besteht aus Epoxidharz. Er weist einen in radialer Richtung nach innen vorspringenden Flansch auf, an den das Dichtelement 4 aus Acrylnitril-Butadiencopolymer unmittelbar anvulkanisiert ist. Das Dichtelement 4 ist mit einer Dichtlippe 5 und einer Staublippe 6 versehen. Beide liegen unter einer elastischen Vorspannung an den jeweils zugeordneten Gegenflächen an.

Die der Dichtlippe 5 zugeordnete Gegenfläche 7 schließt mit der Dichtungsachse und dem abgedichteten Raum « A » einen Winkel von 73° ein, die der Staublippe 6 zugeordnete Gegenfläche hat eine achsparallele Erstreckung. Letztere ist nicht nennenswert belastet und soll insbesondere das Eindringen von Staub in das Innere der Kassettendichtung verhindern.

Der Innenring 2 besteht aus gehärtetem Stahl und ist am Außenumfang mit einem flanschartigen Vorsprung versehen. Dieser greift mit allseitigem Spiel in eine nach innen geöffnete Nut des Außenringes 1 ein, wodurch der Innenring 2 und der Außenring 1 unverlierbar verbunden sind. Die Außenseite des flanschartigen Vorsprunges ist in Fügerichtung kegelig verjüngt, ebenso die Innenseite 8 der Mündung des Außenringes 1. Das Zusammenfügen der beiden Teile wird hierdurch erleichtert. Es bedingt ein Einschnappen des flanschartigen Vorsprunges in die nach innen geöffnete Nut des Außenringes 1 insofern, als der größte Durchmesser des flanschartigen Vorsprunges wenige Zehntel Millimeter größer ausgelegt ist als der kleinste Innendurchmesser der Innenseite 8 der Mündung des Außenringes 1. Die zur Herbeiführung des Einschnappens erforderliche, elastische Deformierung des Außenringes ist nur bei nicht eingebauter Kassettendichtung möglich. Sie ist indessen so gering, daß eine mechanische Schädigung des Außenringes 1 als Folge dieser Deformierung nicht befürchtet werden müßte.

Die Gegenflächen der Dichtlippe 5 und der Staublippe 6 des Innenringes 2 weisen eine Oberflächengüte auf, wie beispielsweise durch einen Schleifvorgang erzielbar. Sie ist in beiden Fällen identisch und durch feine, sich in Umfangsrichtung erstreckende Rillen gekennzeichnet, die bei sich drehenden Wellen eine Förderwirkung in Richtung des abgedichteten Raumes « A » haben. Die Dichtlippe 5 weist einen größeren Durchmesser auf als die Staublippe 6. Die im Bereich der Dichtlippe entstehende Förderwirkung ist daher größer als im Bereich der Staublippe 6, was das erzielte Abdichtungsergebnis vorteilhaft unterstützt. Sowohl die Dichtlippe 5 als auch die Staublippe 6 liegen nur aufgrund ihrer werkstoff- und abmessungsbedingten Elastizität unter einer elastischen Vorspannung an den jeweils zugeordneten Gegenflächen des Innenringes 2 an.

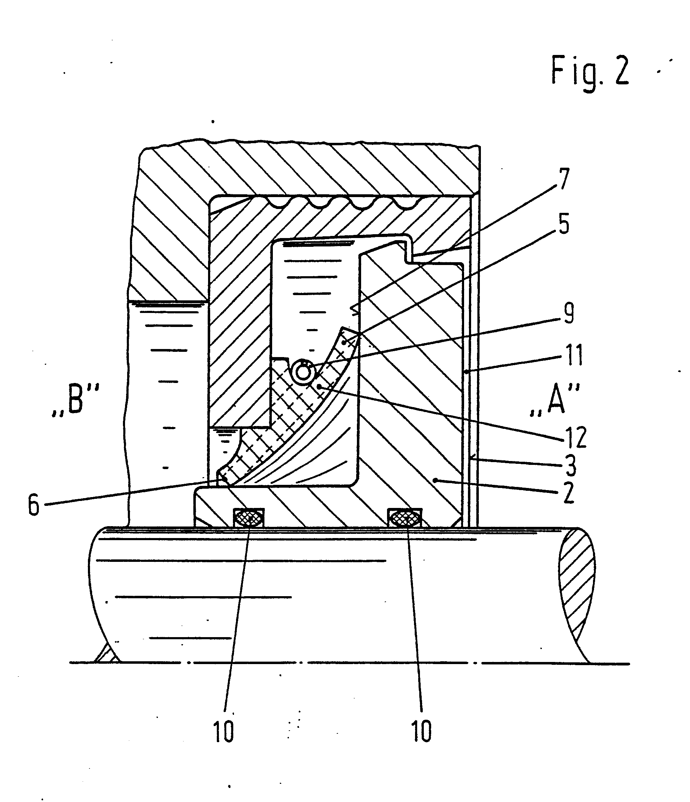

Die in Figur 2 gezeigte Ausführung einer Kassettendichtung ist der vorstehend beschriebenen äußerlich sehr ähnlich. Für die axiale Anpressung der Dichtlippe 5 ist in diesem Falle jedoch ein zusätzliches Federelement 9 vorgesehen, welches durch eine Ringwendelfeder gebildet wird. Die Ringwendelfeder ist in eine nach außen geöffnete Nut des Zwischenringes 12 eingeschnappt.

Die mit der Dichtlippe 5 in Eingriff stehende Gegenfläche 7 des Innenringes 2 ist der Rotationsachse unter einem Winkel von 90° zugeordnet, die mit der Staublippe 6 in Eingriff stehende Gegenfläche ist wiederum achsparallel ausgerichtet.

Der Innenring ist verdrehsicher und flüssigkeitsdicht mit Hilfe von O-Ringen 10 auf der Oberfläche der abgedichteten Welle gelagert. Er folgt daher ebenso wie die unter Figur 1 beschriebene Ausführung deren Drehbewegung.

Der Innenring 2 weist auf seiner Naßseite 3 sich in radialer Richtung nach außen erstreckende Vertiefungen 11 auf. Auf das entlang der abgedichteten Welle zugeführte, abgedichtete Medium wird hierdurch eine starke, nach außen gerichtete Förderwirkung ausgeübt, was über die relativ vergrößerte Oberfläche eine verbesserte Abführung von Wärme aus dem Innenring 2 gewährleistet. Das Auftreten kritischer Temperaturen insbesondere im Bereich der Dichtlippe 5 wird hierdurch zuverlässig verhindert.

## Patentansprüche

1. Kassettendichtung aus einem Außen- und einem Innenring, bei der der Außenring (1) mit einer Dichtlippe (5) aus elastisch nachgiebigem Werkstoff versehen ist, die unter einer elastischen Vorspannung an dem Innenring (2) anliegt, bei der der Außenring mit einer nach innen weisenden Haltekralle versehen ist, die auf der der Dichtlippe (5) zugewandten Seite durch eine sich in radialer Richtung erstreckende Stützfläche begrenzt ist, wobei die Haltekralle hinter der von der Dichtlippe abgewandten, sich in radialer Richtung erstreckende Haltefläche eines nach außen ragenden Vorsprunges des Innenringes (2) federnd eingeschnappt ist, wobei wenigstens die Stützfläche oder die Haltefläche umlaufend ausgebildet ist und wobei die Stützfläche und die Haltefläche einen Abstand voneinander haben, dadurch gekennzeichnet, daß die Dichtlippe (5) an einer sich im wesentlichen in radialer Richtung erstreckenden Gegenfläche (7) des Innenringes (2) anliegt, daß der Innenring auf der von der Gegenfläche (7) abgewandten Naßfläche (3) durch abgedichtetes Medium benetzt ist und daß der Innenring (2) zwischen der Gegenfläche (7) und der Naßfläche (3) durchgehend aus metallischem Werkstoff besteht.

2. Kassettendichtung nach Anspruch 1, dadurch gekennzeichnet, daß die Dichtlippe (5) und/oder die Gegenfläche (7) mit hydrodynamisch wirkenden Rückförderelementen versehen ist.

3. Kassettendichtung nach Anspruch 1 bis 2, dadurch gekennzeichnet, daß die Gegenfläche (7) und die Dichtungsachse in Richtung des abgedichteten Raumes (A) einen Winkel von 60 bis 90° einschließen.

4. Kassettendichtung nach Anspruch 1 bis 3, dadurch gekennzeichnet, daß die Dichtlippe (5) am Außenumfang eines sich im wesentlichen in radialer Richtung erstreckende, membranartig ausgebildeten Zwischenringes (12) angeordnet ist.

5. Kassettendichtung nach Anspruch 4, dadurch gekennzeichnet, daß der Zwischenring (12) eine nach außen geöffnete, umlaufende Nut aufweist, in der ein elastisch aufgeweitetes Federelenent (9) angeordnet ist.

6. Kassettendichtung nach Anspruch 5, dadurch gekennzeichnet, daß das Federelement durch eine Ringwendelfeder gebildet ist.

7. Kassettendichtung nach Anspruch 1 bis 6, dadurch gekennzeichnet, daß der Innenring (2) aus gehärtetem Stahl besteht.

8. Kassettendichtung nach Anspruch 1 bis 7, dadurch gekennzeichnet, daß der Innenring auf der Naßfläche (3) Vertiefungen (11) aufweist, die in radialer Richtung nach außen geöffnet sind.

9. Kassettendichtung nach Anspruch 1 bis 8, dadurch gekennzeichnet, daß die Dichtlippe (5) zu einer von dem abgedichteten Raum (A) abgewandten Staublippe (6) verlängert ist und daß die Staublippe (6) an dem sich in axialer Richtung erstreckenden Schenkel des Profils des Innenringes (2) anliegt.

10. Kassettendichtung nach Anspruch 9, dadurch gekennzeichnet, daß der Innenring (2) und-/oder die Staublippe (6) im Bereich der gegenseitigen Berührungsflächen mit Rückförderelementen für abgedichtetes Medium versehen sind.

11. Kassettendichtung nach Anspruch 10, dadurch gekennzeichnet, daß die Rückförderelemente im Bereich der Staublippe (6) einen Querschnitt und gegenseitigen Abstand haben, der mit dem Querschnitt und dem gegenseitigen Abstand der hydrodynamisch wirkenden Rückförderelemente im Bereich der Dichtlippe übereinstimmt.

12. Kassettendichtung nach Anspruch 1 bis 11, dadurch gekennzeichnet, daß der Außenring (1) aus Kunststoff besteht.

## Claims

1. A cassette seal made of an outer ring and an inner ring, the outer ring (1) being provided with a sealing lip (5) of flexibly compliant material which bears against the inner ring (2) under a flexible pretension, the outer ring being provided with an inwardly directed retaining claw which is bounded on the side facing the sealing lip (5) by a supporting surface extending in a radial direction, the retaining claw being clipped resiliently behind the retaining surface of an outwardly protruding projection of the inner ring (2) facing away from the sealing lip and extending in a radial direction, at least the supporting surface or the retaining surface being of circumferential design and the supporting surface and the retaining surface being spaced apart, characterized in that the sealing lip (5) bears against a counter surface (7) of the inner ring (2) extending substantially in a radial direction, that the inner ring is wetted by sealed medium on the wet surface (3) facing away from the counter surface (7), and that the inner ring (2) consists of metallic material throughout between the counter surface (7) and the wet surface (3).

2. A cassette seal according to claim 1, characterized in that the sealing lip (5) and/or the counter surface (7) are provided with a hydrodynamically acting return element.

3. A cassette seal according to claim 1 or 2, characterized in that the counter surface (7) and the sealing axis enclose an angle of 60 to 90° in the direction of the sealed space (A).

4. A cassette seal according to any of claims 1 to 3, characterized in that the sealing lip (5) is arranged on the outer periphery of an intermediate ring (12) extending substantially in a radial direction and of diaphragm-like design.

5. A cassette seal according to claim 4, characterized in that the intermediate ring (12) has an outwardly open circumferential groove in which a flexibly widened spring element (9) is arranged.

6. A cassette seal according to claim 5, characterized in that the spring element is formed by an annular spiral spring.

7. A cassette seal according to any of claims 1 to 6, characterized in that the inner ring (2) consists of hardened steel.

8. A cassette seal according to any of claims 1 to 7, characterized in that the inner ring has indentations (11) on the wet surface (3) which are outwardly open in a radial direction.

9. A cassette seal according to any of claims 1 to 8, characterized in that the sealing lip (5) is elongated into a dust lip (6) facing away from the sealed space (A), and in that the dust lip (6) bears against the axially extending limb of the profile of the inner ring (2).

10. A cassette seal according to claim 9, characterized in that the inner ring (2) and/or the dust lip (6) are provided in the region of the mutual contact areas with a return element for sealed medium.

11. A cassette seal according to claim 10, characterized in that the return element(s) have a crosssection and mutual spacing in the region of the dust lip (6) which coincides with the crosssection and the mutual spacing of the hydrodynamically acting return element(s) in the region of the sealing lip.

12. A cassette seal according to any of claims 1 to 11, characterized in that the outer ring (1) consists of a plastics material.

## Revendications

1. Joint pour cassettes comportant une bague extérieure et une bague intérieure dans lequel la bague extérieure (1) est pourvue d'une lèvre d'étanchéité (5) en matériau flexible élastique qui appuie sous précontrainte élastique sur la bague intérieure (2) dans lequel la bague extérieure est pourvue d'une griffe d'arrêt tournée vers l'intérieur, tandis que le côté tourné vers la lèvre d'étanchéité (5) est limité par une surface d'appui s'étendant en direction radiale et que la griffe d'arrêt vient s'emboîter élastiquement derrière la surface d'arrêt d'une saillie de la bague intérieure (2) s'étendant vers l'extérieur, ladite surface s'étendant en direction radiale du côté opposé à la lèvre d'étanchéité, tandis qu'au moins la surface d'appui ou la surface d'arrêt s'étendent sur toute la périphérie et ou la surface d'appui et la surface d'arrêt sont situées à une certaine distance l'une de l'autre, caractérisé en ce que la lèvre d'étanchéité (5) appuie sur la surface opposée (7) de la bague intérieure (2) s'étendant essentiellement en direction radiale, en ce que la bague intérieure est mouillée par le fluide à contenir sur la surface mouillée (3) opposée à la surface opposée (7) et en ce que la bague intérieure (2) est entièrement réalisée en matériau métallique entre la surface opposée (7) et la surface mouillée (3).

2. Joint pour cassettes selon la revendication 1, caractérisé en ce que la lèvre d'étanchéité (5) et/ou la surface opposée (7) sont pourvues d'éléments de renvoi à effet hydrodynamique.

3. Joint pour cassettes selon les revendications 1 et 2, caractérisé en ce que la surface opposée (7) et l'axe du joint forment en direction de l'enceinte à fermer de manière étanche (A) un angle de 60 à 90°.

4. Joint pour cassettes selon les revendications 1 à 3, caractérisé en ce que la lèvre d'étanchéité (5) est disposée à la périphérie extérieure d'une bague intermédiaire (12) en forme de membrane s'étendant essentiellement en direction radiale.

5. Joint pour cassettes selon la revendication 4, caractérisé en ce que la bague intermédiaire (12) présente une rainure périphérique s'étendant vers l'extérieur dans laquelle est disposé un élément élastique (9) qui est élargi élastiquement.

6. Joint pour cassettes selon la revendication 5, caractérisé en ce que l'élément élastique est constitué par un ressort hélicoïdal.

7. Joint pour cassettes selon les revendications 1 à 6, caractérisé en ce que la bague intérieure (2) est réalisée en acier trempé.

8. Joint pour cassettes selon revendications 1 à 7, caractérisé en ce que la bague intérieure présente sur sa surface mouillée (3) des renfoncements (11) qui sont ouverts vers l'extérieur en direction radiale.

9. Joint pour cassettes selon les revendications 1 à 8, caractérisé en ce que la lèvre d'étanchéité (5) se prolonge par une lèvre arrêtant les poussières (6) opposée à l'enceinte à fermer de manière étanche (A) et en ce que la lèvre arrêtant les poussières (6) appuie sur la branche du profil de la bague intérieure (2) s'étendant en direction axiale.

10. Joint pour cassettes selon la revendication 9, caractérisé en ce que la bague intérieure (2) et/ou la lèvre arrêtant les poussières (6) sont pourvues dans la zone des surfaces de contact mutuel d'éléments de renvoi pour le fluide à contenir.

11. Joint pour cassettes selon la revendication 10, caractérisé en ce que les éléments de renvoi ont, dans la zone de la lèvre arrêtant les poussières (6), une section et une distance mutuelle qui correspond à la section et à la distance mutuelle des éléments de renvoi à action hydrodynamique existant dans la zone de la lèvre d'étanchéité.

12. Joint pour cassettes selon les revendications 1 à 11, caractérisé en ce que la bague extérieure (1) est réalisée en matière plastique.

Fig. 1

1

8

7

5

12

„ A ''

3

2

6

4

Fig. 2